(19)

Europäisches Patentamt

European Patent Office

Office européen des brevets

(11)  **EP 2 909 361 B1**

(12)  **EUROPEAN PATENT SPECIFICATION**

(45) Date of publication and mention
of the grant of the patent:
**19.12.2018  Bulletin 2018/51**

(21) Application number: **13798711.1**

(22) Date of filing: **18.10.2013**

(51) Int Cl.:
*C23F 13/04* (2006.01)      *C23F 13/06* (2006.01)
*C23F 13/10* (2006.01)      *C04B 111/26* (2006.01)
*H01M 12/06* (2006.01)

(86) International application number:
**PCT/GB2013/052734**

(87) International publication number:
**WO 2014/060779 (24.04.2014 Gazette 2014/17)**

(54)  **PROTECTION OF STEEL REINFORCED CONCRETE ELEMENTS**

SCHUTZ VON STAHLVERSTÄRKTEN BETONELEMENTEN

PROTECTION D'ÉLÉMENTS DE BÉTON ARMÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **18.10.2012   US 201261715373 P**

(43) Date of publication of application:
**26.08.2015   Bulletin 2015/35**

(73) Proprietors:
• **Glass, Gareth**
**Lichfield**
**Staffordshire WS14 9DQ (GB)**
• **Davison, Nigel**
**Swadlincote, Derbyshire DE12 8DG (GB)**
• **Roberts, Adrian**
**Chilwell, Nottinghamshire NG9 5HG (GB)**

(72) Inventors:
• **GLASS, Gareth**
**Lichfield**
**Staffordshire WS14 9DQ (GB)**

• **DAVISON, Nigel**
**Swadlincote**
**Derbyshire DE12 8DG (GB)**
• **ROBERTS, Adrian**
**Nottinghamshire NG9 5HG (GB)**
• **GLASS, Matthew**
**Lichfield**
**Staffordshire WS14 9DQ (GB)**

(74) Representative: **Wilson Gunn**
**Blackfriars House**
**The Parsonage**
**5th Floor**
**Manchester M3 2JA (GB)**

(56) References cited:
**WO-A2-2005/106076      US-A- 4 861 449**
**US-A1- 2010 314 262      US-B2- 8 211 289**

**Description**

The present invention relates to electrochemical protection of steel in reinforced concrete construction and, in particular, to the use of anode assemblies in treating steel corrosion in corrosion damaged steel reinforced concrete elements making up a concrete structure.

Atmospherically exposed steel reinforced concrete structures suffer from corrosion induced damage mainly as the result of carbonation or chloride contamination of the concrete. As the steel reinforcement corrodes, it produces by-products that occupy a larger volume than the steel from which the products are derived. As a result, expansion occurs around reinforcing steel bars. This causes cracking and delamination of the concrete cover of the steel. Typical repairs involve removing this patch of corrosion damaged concrete from the concrete structure(s). It is good practice to expose corroding steel, in the area of damage, and to remove the concrete behind the corroding steel. The concrete profile is then restored with a compatible cementitious repair concrete or mortar. The concrete then consists of the "parent" concrete (i.e., the remaining original concrete) and the "new" patch repair material.

The parent concrete, adjacent to the repair area, is typically likely to suffer from some of the same chloride contamination or carbonation that caused the original corrosion damage. It is to be appreciated that steel corrosion still remains a risk in the parent concrete. Corrosion in concrete is an electrochemical process and electrochemical treatments have been used to treat this corrosion risk.

Established electrochemical treatments include cathodic protection, chloride extraction and re-alkalisation. These are classed as either permanent or temporary treatments. In a permanent treatment the treatment must be sustained to achieve the protective effect on which the treatment is based. A permanent treatment may for example be based on achieving a current induced negative steel potential shift in which a protection current must be sustained to achieve a negative steel potential shift. By contrast temporary treatments rely on a protective effect that persists after the treatment has ended and may for example be based on removing chloride or restoring pH.

Electrochemical treatments may also be classed as either impressed current or galvanic (sacrificial) treatments. In impressed current electrochemical treatments, an anode is connected to the positive terminal and the steel is connected to the negative terminal of an external source of DC power. An example of an impressed current anode is an activated titanium electrode. An anode is an electrode supporting a substantial oxidation reaction and the oxidation reaction induced by an external source of DC power on an activated titanium electrode turns water into oxygen and hydrogen ions (acid).

In galvanic electrochemical treatments, the protection current is provided by one or more sacrificial anodes that are connected to the steel. Sacrificial anodes are electrodes comprising metals less noble than steel (more negative than) with the main anodic reaction being the oxidation of a sacrificial metal element. The natural potential difference between the sacrificial anode and the steel drives a protection current when the sacrificial anode is connected to the steel. Sacrificial anode assemblies are self powered assemblies. The protection current flows as ions from the sacrificial anode into the parent concrete and to the steel, and returns as electrons through the steel and an electron conductor to the sacrificial anode. The direction of current flow is conventionally expressed as the direction of movement of positive charge.

Sacrificial anodes for concrete structures may be divided into discrete or continuous anodes. Discrete anodes are individually distinct elements that contact a concrete surface area that is substantially smaller than the surface area of the concrete covering the protected steel. The anode elements are normally connected to each other through a conductor that is not intended to be a sacrificial anode and are normally embedded within cavities in the concrete. A discrete anode assembly diameter is typically less than 50 mm.

Discrete sacrificial anode systems generally include an anode, a supporting electrolyte and a backfill. An activating agent is often included to maintain sacrificial anode activity. The backfill provides space to accommodate the products of anodic dissolution and prevent disruption of the surrounding hardened concrete. Discrete sacrificial anodes have the advantage that it is relatively easy to achieve a durable attachment between the anode and the concrete structure by embedding the anodes within cavities formed in the concrete. Compact discrete anodes may be located in drilled holes in the concrete, typically less than 50mm in diameter and less than 200mm long.

Concrete as an environment presents its own unique set of challenges for electrochemical treatments. Anode assemblies that are embedded within concrete must be dimensionally stable as concrete is a rigid material that does not tolerate embedded expanding assemblies. Anode activating agents are specific to concrete or need to be arranged in a way that would present no corrosion risk to the neighbouring steel. Anodes are located relatively close to the steel in the concrete. Protection criteria for atmospherically exposed concrete differ from the criteria used in other environments and some electrochemical treatments are unique to concrete. This is partly because steel is normally passive in uncontaminated, alkaline concrete.

Reinforced concrete structures typically comprise various elements. Examples include columns, beams, slabs, joints, and abutments. Anodes systems for electrochemical treatments will typically be divided into zones which, for example, depend on the structural element, the density of steel in the concrete, and the aggressive nature of the local environment.

One problem with the use of sacrificial anodes in galvanic treatments is that the power to arrest an active corrosion process on the steel in concrete is limited by the voltage difference between the sacrificial anode and the steel. This problem is greatest for compact discrete sacrificial anode systems where large currents are required from relatively small anodes to protect relatively large surfaces of the steel. A compact discrete anode will typically deliver current into an area of anode surface that is one tenth to one fiftieth of the area of the steel that the anode is expected to protect.

GB 2426008 (US 7,909,982) discloses a new basis for protecting steel in concrete that relies on a process described by the phrase "pit re-alkalisation". A pit re-alkalisation process arrests active corrosion by restoring a high pH at the corroding sites.

It is an objective of this invention to provide improved methods and assemblies for treating concrete to address or at least ameliorate the problem of the corrosion of steel used for reinforcing the concrete. The exemplary implementations of the invention described herein have particular relevance to what is described in US 7,909,982 and has the potential to provide improvements over the methods and assemblies disclosed in US 8,273,239, US 8,211,289, US 7,704,372 and US 7,909,982.

The invention provides a method of protecting steel in a reinforced concrete element and a sacrificial anode reinforced concrete protection assembly according to the claims.

According to one aspect the disclosure provides a method of protecting steel in a reinforced concrete element, the reinforced concrete of the element containing an electrolyte, the method comprising: providing at least one primary anode, wherein the at least one primary anode is a sacrificial anode; providing at least one secondary anode, wherein the at least one secondary anode is connected to a positive terminal of at least one source of direct current, 'DC', power; arranging the at least one primary anode and at least one secondary anode to have an ionic connection with the steel in the reinforced concrete element via the electrolyte; connecting the at least one primary anode to the steel in the reinforced concrete element using an electron conductor; connecting the negative terminal of the source of DC power to the steel in the reinforced concrete element using an electron conductor.

In said arranging step, each of at least one pair of primary anodes may be provided on a different respective side of at least one secondary anode.

In said arranging step, each of at least one pair of primary anodes may be provided on a different respective side of a plurality of secondary anodes.

In said arranging step, each of at least one pair of secondary anodes may be provided on a different respective side of at least one primary anode.

The number of primary anodes provided may be greater than the number of secondary anodes.

A plurality of primary anodes may be provided and a single secondary anode is provided within a region of said reinforced concrete element.

In said arranging step, said at least one primary anode may be spaced from said at least one secondary anode at a distance of no more than substantially 2 meters within a 10% tolerance (preferably no more than substantially 1 meter or no more than substantially 600mm).

In said arranging step, said at least one primary anode and said at least one secondary anode may be provided at a density of at least one primary anode (preferably at least two primary anodes) and said at least one secondary anode per square meter of a surface of said reinforced concrete.

The method may further comprise connecting each primary anode to the negative terminal of the source of DC power using at least one electron conductor other than the steel.

The reinforced concrete element may comprise an element (e.g. a column, pillar, section or the like) of a larger concrete structure (e.g. a bridge, building, building façade, roadway or the like).

Each said secondary anode may be connected to a positive terminal of a respective source of DC power (e.g. as part of an integrated anode assembly in which said secondary anode and said source of DC power are integrated to form a single unit).

Each said secondary anode may be a sacrificial anode.

A plurality of secondary anodes may be connected to a positive terminal of a single external source of DC power as part of an impressed current system.

According to one aspect the disclosure provides a sacrificial anode reinforced concrete protection assembly for use in an above method the assembly comprising: a sacrificial anode for use as the secondary anode of said method, the sacrificial anode having a first charge capacity; and a cell for use as the source of DC power of said method, the cell having a second charge capacity; wherein the sacrificial anode is integrated with the cell as a single unit with the sacrificial anode connected to a positive terminal of the cell; and wherein the first charge capacity is greater than the second charge capacity.

According to one aspect the disclosure provides a sacrificial anode reinforced concrete protection the assembly comprising: a sacrificial anode for use as the secondary anode of said method, the sacrificial anode having a first charge capacity; and a cell for use as the source of DC power of said method, the cell having a second charge capacity; wherein the sacrificial anode is integrated with the cell as a single unit with the sacrificial anode connected to a positive terminal of the cell; and wherein the charge capacity of the sacrificial anode is substantially at least 100 kilo-Coulombs within a 10% tolerance.

According to one aspect the disclosure provides a sacrificial anode reinforced concrete protection assembly for use in an above method, the assembly comprising:

a sacrificial anode for use as the secondary anode of said method; and a cell for use as the source of DC power of said method, the cell having a cell anode forming a negative terminal, a cell cathode forming a positive terminal and a cell electrolyte ionically connecting the cell anode and the cell cathode; wherein the sacrificial anode is integrated with the cell as a single unit with the sacrificial anode connected to the positive terminal of the cell; and wherein the cell cathode comprises an air cathode, the air cathode having a first face substantially in contact with the cell electrolyte, and a second face substantially in contact with air.

The cell may comprise a cell anode forming a negative terminal, a cell cathode forming the positive terminal and a cell electrolyte ionically connecting the cell anode and the cell cathode.

According to one aspect the disclosure provides a sacrificial anode reinforced concrete protection assembly for use in an above method, the assembly comprising: a sacrificial anode for use as the secondary anode of said method; and a cell for use as the source of DC power of said method, the cell having a cell anode forming a negative terminal, a cell cathode forming a positive terminal and a cell electrolyte ionically connecting the cell anode and cell cathode; wherein the sacrificial anode is integrated with the cell as a single unit with the sacrificial anode connected to the positive terminal of the cell; and wherein the cell cathode and the sacrificial anode are spaced away from one another but interconnected using at least one electron conducting wire.

The assembly may comprising a further anode, wherein the further anode is a sacrificial anode; wherein the further anode and the secondary anode are integrated with the cell as a single unit with the secondary anode connected to the positive terminal of the cell.

According to one aspect the disclosure provides a sacrificial anode reinforced concrete protection assembly comprising: a primary anode, wherein the primary anode is a sacrificial anode; a secondary anode, wherein the secondary anode is a sacrificial anode; and a cell, the cell having a cell anode forming a negative terminal, a cell cathode forming a positive terminal and a cell electrolyte ionically connecting the cell anode and the cell cathode; wherein the primary anode and the secondary anode are integrated with the cell as a single unit with the secondary anode connected to the positive terminal of the cell.

The primary anode may be positioned between the secondary anode and the cell.

The primary anode may be connected to the negative terminal of the cell.

The primary anode and cell anode may be formed from a common piece of sacrificial material.

The primary anode and cell anode may be formed from different pieces of sacrificial material.

The cell cathode may comprises an air cathode, the air cathode having a first face substantially in contact with the cell electrolyte, and a second face substantially in contact with air.

The cell cathode and the sacrificial anode of the secondary anode may be spaced away from one another but interconnected using at least one electron conducting wire.

The secondary anode may have a first charge capacity and the cell may have a second charge capacity wherein the first charge capacity may be greater than the second charge capacity.

The charge capacity of the sacrificial anode may be substantially no less than 1.25 times the charge capacity of the cell within in a 10% tolerance.

The charge capacity of the sacrificial anode may be substantially at least 100 kilo-Coulombs within a 10% tolerance (preferably at least 150 kilo-Coulombs).

Advantages of the above aspects include the advantage that a powered second anode may be used to mitigate any additional corrosion risk when it occurs while sustaining a galvanic protection system.

This disclosure will now be described further with reference, by way of example only, to the drawings in which:

Figure 1 illustrates the one arrangement of general connections in a protection system for a steel reinforced concrete element.

Figure 2 illustrates an integrated cell and sacrificial anode assembly wherein the cell is formed on an outer surface of a sacrificial anode and is exposed to air.

Figure 3 illustrates an integrated cell and sacrificial anode assembly wherein the cell cathode is formed in the centre of a sacrificial anode and is exposed to air.

Figure 4 illustrates another arrangement of an integrated cell and sacrificial anode assembly and is exposed to air.

Figure 5 illustrates a method of using an integrated cell and sacrificial anode assembly.

Figure 6 illustrates an integrated cell and sacrificial anode assembly that includes 3 anode elements and an air cathode.

Figure 7 illustrates an integrated cell and sacrificial anode assembly wherein the cell cathode is located within the assembly and does not require air.

Figure 8 illustrates another integrated cell and sacrificial anode assembly wherein the assembly includes 3 anode elements and the cell cathode is located within the assembly and the cell cathode does not require air.

Figure 9 illustrates a cell and sacrificial anode assembly wherein the assembly with 3 anode elements that may be separated into two separate assemblies.

Figure 10 illustrates another arrangement of a cell and sacrificial anode assembly wherein the assembly with 3 anode elements that may be separated into two separate assemblies.

Figure 11 illustrates arrangement using the different and separate assemblies to protect steel in concrete.

Figure 12 illustrates the another arrangement of general connections in a protection system for a steel reinforced concrete element that includes 3 anodes.

Figure 13 illustrates another arrangement using the different and separate assemblies to protect steel in concrete.

Figure 14 shows the charge delivered to protected steel by a sacrificial anode and the cell voltage of a D sized alkaline cell when the D sized alkaline cell is connected in series with the anode and the steel.

Figure 15 shows the charge delivered to protected steel by a sacrificial anode and the protection when a D sized alkaline cell is connected in series with the anode and the steel.

Figure 16 illustrates the construction of a cell and sacrificial anode assembly when the sacrificial anode has substantially more charge than the cell.

Figure 17 illustrates another arrangement using the different and separate assemblies to protect steel in concrete.

Figure 18 illustrates another arrangement of general connections in a protection system for a steel reinforced concrete element that uses a more general DC power source.

Figure 19 provides a circuit diagram of the arrangement in Figure 18 to assist in selecting the anode spacing.

It will be appreciated that the combinations of features shown in individual figures and described with reference to specific examples below are purely exemplary. As those skilled in the art will readily understand, specific features of any of the examples described and shown may be used in isolation from the example for which they are specifically disclosed and may be used in combination with features, or a subset of features, of any other specific example to the extent that it is technically feasible.

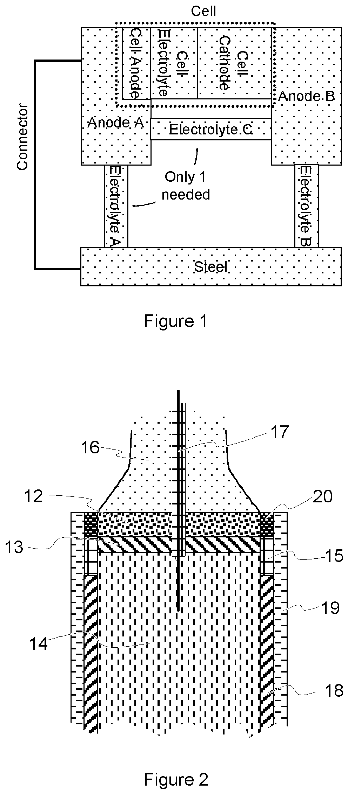

Figure 1 is a block diagram showing the general connections in a protection system for a steel reinforced concrete element. Referring to Figure 1, a sacrificial metal element (Anode A) is connected to the steel to be protected by an electron conducting conductor and by an ionically conducting electrolyte (Electrolyte A). A sacrificial metal element comprises a metal less noble than steel (more electrochemically active than steel), examples of which include zinc, aluminium and magnesium or alloys thereof. Zinc and its alloys are preferred for use in concrete. The sacrificial metal element provides a key component for a sacrificial anode (galvanic anode). The connections through the conductor and electrolyte provide sacrificial cathodic protection (or galvanic protection) to the steel. A protection current (galvanic current) flows to the steel as a result of galvanic action.

At the start of the treatment or when a higher corrosion risk exists, the protection current may be supplemented or exclusively provided by a battery or cell (Cell in Figure 1) and a second anode (Anode B in Figure 1) through an electrolyte (Electrolyte B) to the steel. Electrolyte A and Electrolyte B may be the same electrolyte, for example, the electrolyte found within the pore system of concrete. Anode B is preferably a consumable sacrificial metal element which enhances the voltage that delivers the protection current. However Anode B may alternatively be an inert anode that is not consumed, but is driven by a source of DC power.

When the second anode or any element of the cell, which provides the source of DC power, is consumed, current will continue to flow from the first sacrificial metal element via Electrolyte A and/or via Electrolyte B and Electrolyte C to the steel. Electrolyte C may be provided by exposure of a separator between Anode A and Anode B to the environment within concrete as the result of the consumption of Anode B. The cell in Figure 1 comprises a cell cathode, cell electrolyte and a cell anode. The cell anode may be provided by a distinct part of the first Anode (Anode A), or may be separate and in use, connected to the first sacrificial metal element either directly or indirectly. One cell cathode is an air cathode. Other cathodes such as a Manganese Dioxide cathode and/or the like may also be used. The cell electrolyte may be any conventional cell electrolyte. A typical cell might be a conventional battery, such as a Duracell (RTM) DA675N6 1.4V zinc air battery or the like, that has been modified for use in the protection system, for example to increase the anode material available thereby to increase the charge capacity of the cell.

When the cell is delivering 5mA, the cell voltage may be less than 1.4V and or even less than 1.0 V. A low cell drive voltage is particularly preferable when Electrolyte A and/or Electrolyte B are present at the same time as this improves the efficiency of use of the second anode (Anode B) when it comprises a sacrificial metal element and the source of DC power when it comprises a cell.

Figure 2 shows one arrangement of a suitable sacrificial anode assembly. In the arrangement in Figure 2, the cell is formed by a cathode 12, an electrolyte 13 and one face of a primary anode 14 (or first sacrificial metal element). The primary anode 14 in this example is preferably a compact, discrete sacrificial anode for reinforced concrete construction. It preferably comprises zinc or one of its alloys. The cathode is preferably an air cathode. It may comprise a carbon cloth with PTFE diffusion layers on its air side and layers comprising carbon and/or platinum on its solution side. An insulator 15 preferably seals the electrolyte 13 within the cell and distinguishes a distinct section of the primary anode 14 that acts as a cell anode. The insulator may be arranged to prevent the cell electrolyte from escaping as the cell anode is consumed.

In this example an air channel 16 is provided to promote the diffusion of air to the air side of the cathode 12. The air channel 16 may be a porous breathable fabric. It may, for example, be canvas or woven nylon treated with a waterproofing agent. A connector 17 is attached to the primary anode for the purpose of connecting the assembly to the steel. The connector is isolated from the cathode of the cell, by for example using insulation, so that it does not connect to the cell cathode and short out the cell.

Also shown in Figure 2 is a separator 18, separating the primary anode 14 from a secondary anode 19. In this example the secondary anode would comprise a second sacrificial metal element so that when it is consumed, electrolyte from the concrete can enter the separator and current can flow out from the primary anode to the concrete and to the steel. The secondary anode 19 may be constructed from zinc or one of its alloys suitable for use as a sacrificial anode material in concrete construction. The separator 18 is preferably dry and contains no electrolyte when constructed. It, however, may include an activating agent to activate the primary anode 14 when the secondary anode 19 has been consumed and electrolyte from the concrete enters the separator. An activator suitable for use in concrete construction may be directly applied to the surface of the primary anode or it may be included within the material of the separator 18. The secondary anode 19 is connected to the cell cathode 12 with an electron conducting conductor 20. The secondary anode 19 is also preferably coated with an activating agent. When first used, a current will be driven off the secondary anode using the additional voltage provided by the cell until the secondary anode is consumed. Because of this additional voltage, a higher initial protection current will be delivered to the steel.

A feature of the cell arrangement in Figure 2 is the cell cathode 12 extends away from the secondary anode such that some sections of the cell cathode are further from the secondary anode than other sections of the cell cathode 12. The cell cathode 12 will typically extend more than 2mm away from the secondary anode 19 in this arrangement and one section of cell cathode 12 typically spaces another section of cell cathode off the secondary anode 19.

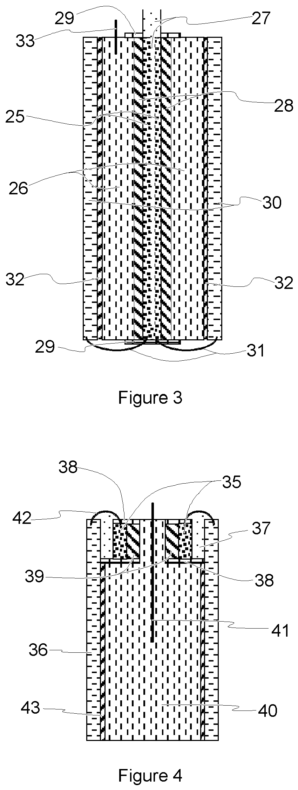

Another arrangement is shown in Figure 3. In this arrangement the air cathode 25 is in a hole that extends through the centre of the primary anode 26. The hole need not extend all the way through the assembly as shown. An air channel 27 runs into this hole. The electrolyte 28 within the cell is sealed within the hole between the cathode 25 and the primary anode 26 with one or more insulators 29 that also define a section of primary anode that may be consumed by the cell before leakage of the cell electrolyte occurs. The air cathode 25 is connected to the secondary anode 30 with elongated electron conducting conductors 31 such as wires or cables. The primary anode 26 is separated from the secondary anode 30 with a separator 32. Both primary 26 and secondary 30 anodes preferably include an activating agent. A connector 33 is connected to the primary anode 26 to facilitate connecting the assembly to a protected metal section.

A feature of the cell arrangement in Figure 3 is the cell cathode 25 is at least in part spaced away from the secondary anode 30 by a section of the primary anode 26.

Another arrangement is shown in Figure 4. In this arrangement the cell cathode 35 is an air cathode and spaced away from the secondary anode 36 by a gap 37 that at least includes air and acts as a channel for air to the cell cathode 35. Isolators 38 seal an electrolyte 39 in a cell formed between the cathode 35 and a distinct portion of the primary anode 40. The primary anode 40 is connected to a connector 41 to facilitate connection of the assembly to a protected metal section. Connectors 42, such as a metal wire, connect the cathode 35 to the secondary anode 36. The secondary anode 36 is separated from the primary anode 40 with a separator 43.

An air cathode is a beneficial feature because it occupies less volume than other cathodes. It is a fuel cell electrode with the fuel being oxygen from the air. The air cathode preferably has an airside that includes air, not dissolved, but as a gas. An air channel provided by, for example, a hydrophobic breathable fabric, may be used to improve the flow of fresh air to the air side of the cathode.

The main advantage of the arrangement in Figures 2 to 4 over that in the prior art of US 8,273,239 is that air diffuses to the air side of an air cathode without having to pass through the cell electrolyte. The air reaches the air cathode before it dissolves in electrolyte. This allows the air cathode to support a higher current density. It also allows the cell to be constructed with a lower internal resistance through the electrolyte.

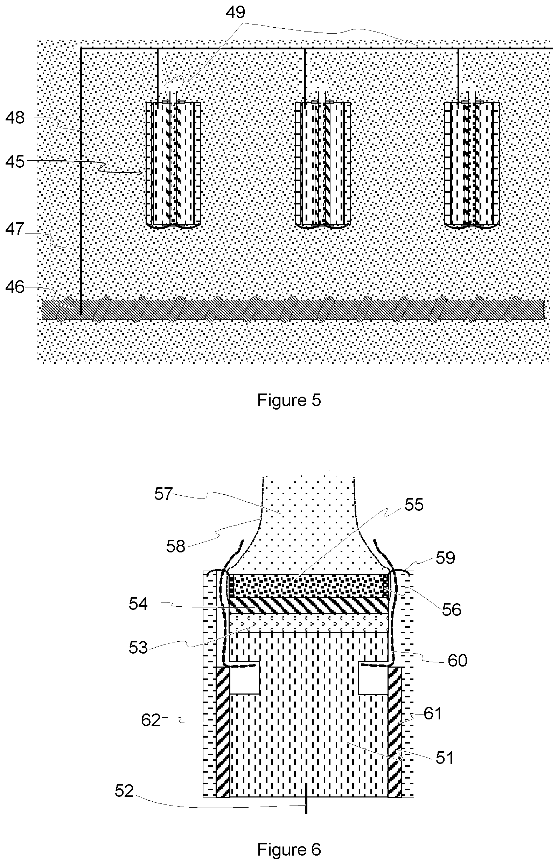

Figure 5 shows one method using the sacrificial anode assemblies described above. An array of compact discrete anodes 45 is connected to the steel reinforcement 46 in concrete 47 via metal wire 48, such as an electric cable, connected to the connector of the assembly. The anodes may be connected to the steel either individually or as an array or string of anodes. In this example anodes with air cathodes are used and an air channel is provided to collect air for the air cathode within the cell of each assembly. The air channel 49 may be provided by a waterproofed but breathable fabric that is partly wrapped around the connecting wires 48.

Figure 6 shows a specific prototype of an anode assembly. In this example, a DuoGuard (TM) 350 anode was cut to shape to provide the zinc for the primary anode 51. The primary anode 51 included a connector 52. One of the surfaces of the primary anode 51 faced the cell of the assembly and formed part of the cell anode.

The cell anode was supplemented with a layer of zinc paste 53 from a Duracell (RTM) DA675N6 battery. Cotton wool saturated with 30% potassium hydroxide solution formed the cell electrolyte 54. The air cathode of a Duracell (RTM) DA675N6 and a section of the nickel coated metal from this cell that held the cathode in place was used to provide the cathode 55 of the cell and the metal 56 that held the cathode in place.

A woven nylon cloth was soaked in a water repellent material and then dried to provide the material for the air channel 57. The cloth was held against the air side of the air cathode 55 using a section of heat shrink insulation tubing 58. A hydrophobic water repellent material at this location prevents solution from entering this region to maintain the efficiency of the air cathode. Electron conducting connectors 59 were soldered to the metal 56 crimped to the air cathode. The cell was then held together and held onto one end of the primary anode with a further layer of adhesive lined heat shrink tubing 60.

Absorbent kitchen paper towel soaked in saturated sodium sulphate solution and then left to dry provided a separator 61 containing an activator (sodium sulphate) for the primary anode. A sheet of zinc taken from the casing of a zinc-carbon D sized cell was folded to form a secondary anode 62 around the primary anode 51 and separator 61. The connectors 59 were soldered to the secondary anode 62 to connect it to the cathode of the cell.

Soldered connections were used where necessary to form the assembly. All soldered connections were insulated with epoxy adhesive. Epoxy adhesive was used to insulate other components where necessary, including the edges of the metal crimped to the cathode, copper wires, and the outer surface of the primary anode in contact with the heat shrink tubing.

The cell of the assembly in Figure 6 was discharged through a 500 Ohm resistor and it generated a current of between 2.2 and 0.2mA over a period of 3 months.

One of the advantages of a cell with an air cathode as a power source is the high charge density of such cells. The charge densities expressed in milliamp hours per cubic centimetre may typically be at least 4 times higher for zinc-air cells (batteries) than the charge density in standard alkaline batteries. This allows much higher charge capacity units to be constructed for use in the relatively small holes of up to 50mm in diameter drilled into concrete structures.

Cells occupy space in sacrificial anode assemblies which limits the charge capacity of the assembly in concrete structures. A typical AA sized alkaline cell has a rated charge capacity of 10kC (2500 mA.hr) while a D sized alkaline cell has a rated capacity of about 60kC (16000 mA.hr). An alkaline cell will typically have a charge density of between 130 and 230 mA.hr.cm$^{-3}$. The use of higher charge density cells like the zinc air cell of about 770 to 1070 mA.hr.cm$^{-3}$ facilitates the construction of composite cell/secondary anode assemblies where the assembly can fit into a drilled hole of up to 50mm in diameter and the secondary anode of the assembly is a sacrificial anode with a charge capacity of at least 100kC and preferably more than 150 kC.

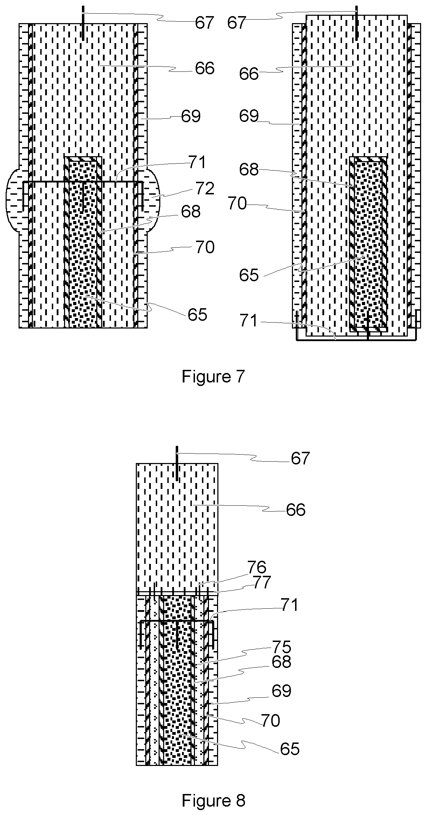

Figures 7 and 8 provide assemblies where cathodes other than air cathodes, such as manganese dioxide cathodes, may be used as part of the cell of the assembly. The shading is consistent for the components (primary anode, secondary anode, cathode, cell electrolyte, separator and in some cases cell anode (tertiary anode) where this is not provided by the primary anode) throughout the figures.

Figure 7 shows two arrangements where a cathode 65, that might comprise manganese dioxide or any other suitable cathode material (examples include silver oxide and mercury oxide) is located in a cavity in the centre of the primary anode 66. The primary anode includes a connector 67 for connecting the compact discrete assembly to a protected metal section. An internal surface of the primary anode is connected by an electrolyte 68 to the cathode 65 to form a cell. A secondary anode 69 comprising a sacrificial metal element is separated from the primary anode 66 by a separator 70 and activator for the primary anode 66. A connector 71, such as a metal wire, provides a path for the conduction of electrons from the secondary anode 69 to the cathode 65. This connector is insulated from the primary anode. In one example in Figure 7, the secondary anode 69 has been thickened at a point 72 where the connector 71 is connected to the secondary anode to ensure a sustained connection and full utilisation of the secondary anode as it corrodes away to provide protection current and ultimately expose the primary anode to the environment. The primary anode need not be exposed at all to the concrete environment until the secondary anode has been consumed and the secondary anode may completely surround the primary anode.

Figure 8 shows an arrangement where the anode of the cell is not provided by the primary anode 66, but it is provided by a third or tertiary anode 75 which is any suitable cell anode, including for example, zinc or lithium. The assembly may also be split into 2 parts in which the cell and secondary anode is split from the primary anode 66. Additional connectors 76 connect the cell anode to the primary anode if it is to be assembled as a single unit in use. An isolating element 77 isolates other components of the cell and secondary anode including the secondary anode 69, separator 70, electrolyte 68 and cathode 65 from the primary anode. In this case the connector 71 that connects the cathode 65 to the secondary anode 69 is isolated from the tertiary anode 75.

In Figure 8 the secondary anode 69 need not be a sacrificial anode that is consumed because the primary anode 66 would not need to deliver current through the secondary anode 69 at any point in time in this arrangement. The secondary anode 69 may instead be an inert electrode (e.g. a layer of carbon or activated titanium). The type of anode that might be used will to some extent depend on the voltage of the cell that provides a source of DC power in the assembly.

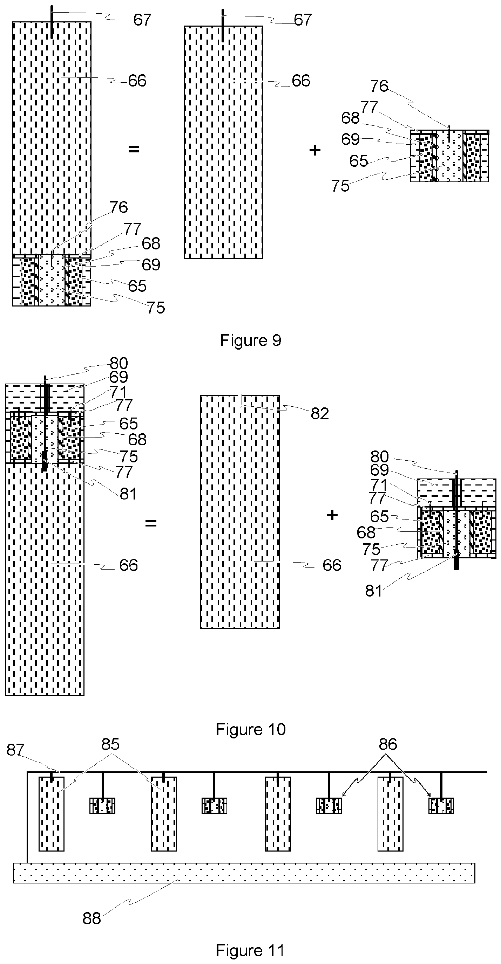

Figures 9 and 10 provide further examples of assemblies that may be split into two parts. The shading and numbering of the elements of the assembled and split assemblies is consistent with that of the previous Figures. Common elements include a cell cathode 65, a primary anode 66, a connector 67 to the primary anode for connecting the primary anode to the protected metal section, a cell electrolyte 68, a secondary anode 69, a connector 71 that connects the cathode to the secondary anode, a cell or tertiary anode 75 and isolating elements 77. It is preferable that the cell electrolyte is isolated from the environment.

In these Figures a tertiary anode or cell anode 75 is provided that can be separated from and connected to the primary anode 66. Insulating elements 77 are used to isolate other elements of the cell and secondary anode from the primary anode and the environment. The two parts may be assembled before use or connected with electron conductors such as metal wires after installation. These figures show both the assembled and split assemblies. One assembly comprises the primary anode with a connector or location at which a connector may be attached. The other assembly comprises a cell with its own cell anode, cell cathode and secondary anode. The shading and numbering of the elements of the assembled and unassembled assemblies is consistent with that of the previous Figures.

In Figure 9, the cell cathode 65 is connected directly to the secondary anode 69, so avoiding the use of a distinct connector.

Figure 10 shows yet another arrangement that may easily be split into 2 parts. In this arrangement the secondary anode 69 comprises a ingot of material. Such a block like shape may be used to include a substantially higher quantity of charge in the secondary anode comprising a sacrificial metal element.

The connector 80 in Figure 10 is a connector connected to both the tertiary (cell) 75 and primary 66 anodes and is insulated from the secondary anode 69 with an isolating element. The connector 80 includes element 81 such as a threaded rod that can be connected to an appropriate connection point 82 in the primary anode 66.

The primary anode provides the sustained galvanic protection current to maintain steel passivity. The primary anode preferably has a charge of at least 100kC and more preferably 150kC. The cell (or power supply) and secondary anode provides short term power in the form of more voltage and therefore more current to induce steel passivity. In the case where this is provided by an integrated cell and secondary anode assembly to be embedded within the concrete of a reinforced concrete structure, the useful life of the primary anode assembly will typically be substantially greater than the useful life the cell and secondary anode assembly. This difference will typically be a factor of 5 or more (the useful life of the primary anode element is 5 times that of the cell and secondary anode element).

Figure 11 shows another method of arranging the components of the assemblies in use. In this example, the primary anode 85 is spaced away from the cell powered secondary anode 86. Electric cable or metal wire connectors 87 connect the components together and to the steel 88. The primary and cell powered secondary anode assemblies may either be connected together to form a string of connected components as shown, or the assemblies may be individually connected to the steel and indirectly connected to each other through the steel. The advantage of the arrangement in Figure 11 is that current from the cell powered secondary anode 86 is more likely to flow to the steel 88 than to any exposed surface of the primary anode 85. This improves the efficiency of use of the limited capacity of a cell powered secondary anode.

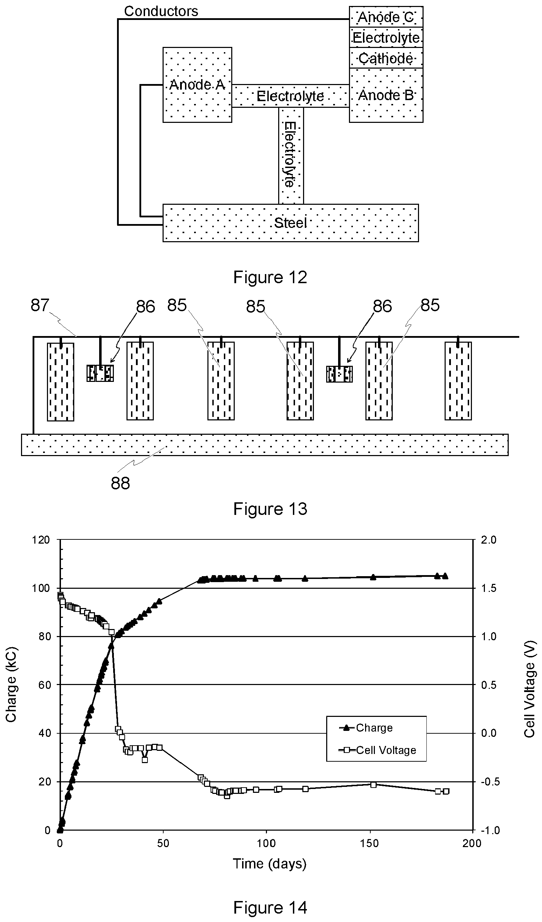

Figure 12 is a block diagram showing the general connections in a protection system for a steel reinforced concrete element that has a separate tertiary or cell anode (Anode C). A primary sacrificial anode (Anode A) is connected to the steel by both electron conducting conductors and by an ionically conducting electrolyte (Electrolyte) to provide a long term sustained current. The cell (Anode C, Electrolyte and Cathode) powered secondary anode (Anode B) provides the power to arrest active corrosion and induce steel passivity typically at the start of the electrochemical treatment. These are also connected to the steel through conductors and electrolyte.

Figure 13 shows another method of arranging the primary anode assemblies 85 and the cell powered secondary anode assemblies 86. Metal wire (e.g. electric cable) connectors 87 connect the components together and to the steel 88. The primary and cell powered secondary anode assemblies may either be connected together to form a string of connected components as shown, or the assemblies may be individually connected to the steel and indirectly connected to each other through the steel.

The high capacity of zinc-air cells and the beneficial impact of this on compact discrete cell and anode assemblies has been considered in the examples above. The high cell capacity allows the overall charge capacity of an integrated compact discrete cell and sacrificial anode assembly to be increased to values above 100kC.

By contrast, a 1.5 V alkaline D sized cell from a reputable manufacturer has a rated capacity of about 60 to 70 kC.

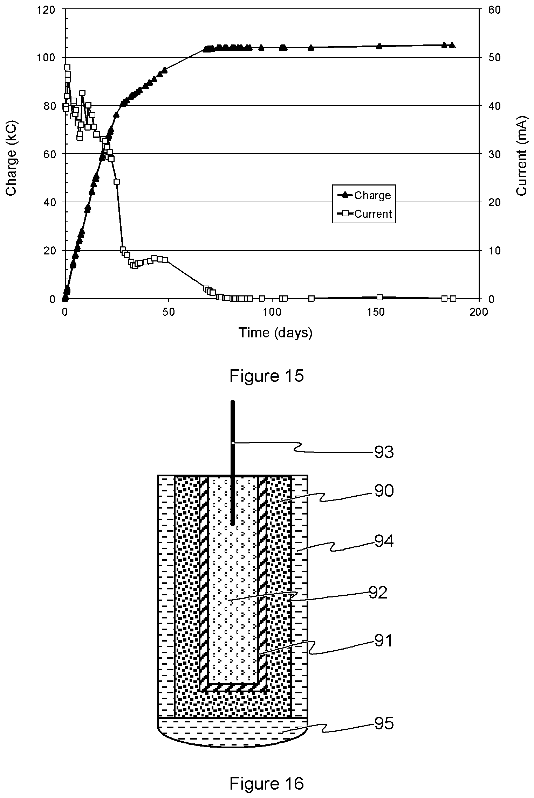

The discharge of a D-sized Duracell (RTM) 1.5 V alkaline battery connected in series with a DuoGuard (TM) D1000 anode and about 1m² of surface area of mild steel plate is shown in Figures 14 and 15. The D1000 anode and the steel plate were buried in a moist soil and the anode was embedded in a standard calcium sulphate/bentonite soil backfill to accelerate the cell discharge test.

Figure 14 shows that after about 30 days, the polarity of the D-sized alkaline battery reversed. After 30 days, the cell no longer added any driving voltage to the natural galvanic potential difference between the sacrificial anode and the steel and indeed subtracted voltage from the galvanic potential difference. Nevertheless the charge that was delivered to the steel continued to rise for the next 45 days. Indeed more than 100kC was delivered in total. Figure 15 shows that galvanic protection current was delivered during this period.

The data in Figure 14 and 15 provides evidence that the capacity of a secondary sacrificial anode in a cell and secondary anode assembly may be more that 100 kC and more that 100kC can be utilized. The capacity of a secondary sacrificial anode in a cell and secondary anode assembly is preferably more than 100 kC. It is preferably more than 125% of the charge capacity of the cell when the cell is an alkaline cell and may lie between 140% and 250% of the charge capacity of the cell when the cell is an alkaline cell or between 100kC and 300 kC.

Figure 16 provides a general arrangement in which for an integrated cell and sacrificial anode compact discrete assembly for installation in a hole drilled or cut into the concrete of reinforced concrete element of a concrete structure. The hole will typically be less than 50mm in diameter. The cell could for example be a D-sized Duracell battery and the sacrificial anode could comprise zinc with a charge equivalent of 125 kC.

In Figure 16 the cell comprises a cell cathode 90, electrolyte in cathode to anode separator 91, and a cell anode 92. The cell anode (tertiary anode) may for example be a paste of zinc particles and 30% potassium hydroxide solution. A connector 93 is connected to the cell anode for connecting the assembly to the protected metal section. A secondary sacrificial anode is attached to the cathode of the cell (for example by connecting it to the outer casing of a D-sized alkaline battery). This could comprise a sheet of zinc 94 wrapped around and soldered to the positive casing of the cell and an ingot of zinc in the form of a dome of zinc soldered to the positive end of the cell to make up a total charge equivalent of the secondary sacrificial anode of more than 100kC.

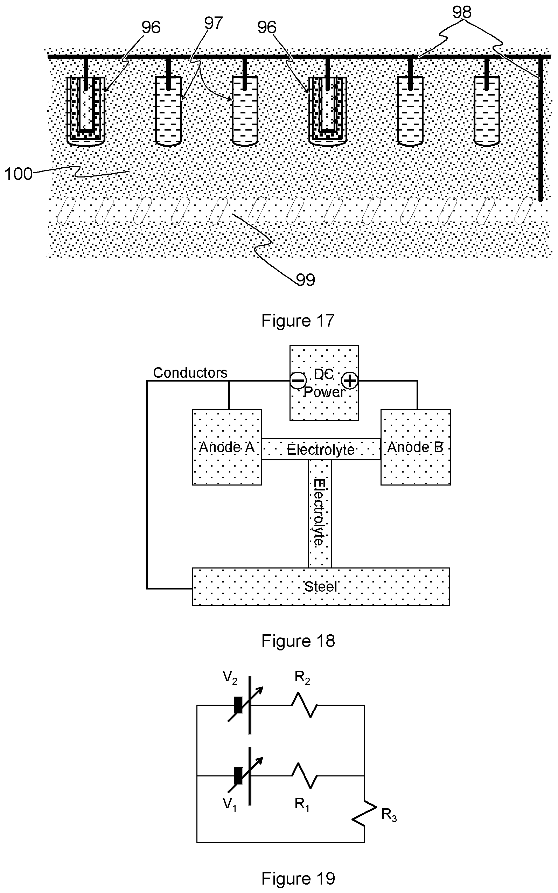

Figure 17 shows one use of the integrated cell and sacrificial anode compact discrete assembly 96 disclosed in Figure 16. In this use the cell and sacrificial anode assembly 96 is interspersed with unpowered primary sacrificial anode assemblies 97 and connected with conductors 98 to the steel 99 in an element of a concrete 100 structure.

In the above examples, the disclosed DC power supply is a cell. Figure 18 shows a more general block diagram using any source of DC power. A primary sacrificial anode (Anode A) is connected to the steel (Steel) to deliver galvanic protection. A DC power supply (DC Power) is used to drive additional current off a secondary anode (Anode B) to deliver additional protection current when it is needed to for example arrest identified corrosion activity. In this arrangement powered and sacrificial systems are used together in the same reinforced concrete element. The powered system may be an anode assembly with its own integral power supply or it may be an external power supply such as those found in impressed current systems and in particular in temporary impressed current systems. When it is an external power supply, a single power supply may be connected to a plurality of secondary anodes. Additional power from an electrochemical protection system is often required when the structure is repaired to arrest ongoing active corrosion of the steel.

When systems are mixed as disclosed in Figure 18, what may happen is the less powerful system fails to deliver any protection current and indeed it may take protection current from the more powerful system and away from the steel. The electric circuit corresponding to Figure 18 is illustrated in Figure 19. $V_1$ and $V_2$ in Figure 19 represent 2 anode systems with different voltages. $R_1$ plus $R_2$ represents the combined resistance through the electrolyte between the two anode systems an $R_3$ represents the remaining resistance through the electrolyte to the steel. Assuming $V_1$ is the less powerful system voltage and $V_2$ is a value where no current flows through $R_1$ then it can be shown that:

$$\frac{V_2}{V_1} = \frac{R_2 + R_3}{R_3}$$

$R_1$, $R_2$ and $R_3$ are to a first approximation proportional to distance and this provides a simple guide to design of a spaced layout of powered anodes and unpowered sacrificial anodes. Systems with variable power may therefore be combined in a reinforced concrete element avoiding current flow from one system directly to another system. A system comprising a spaced layout of powered anodes and unpowered galvanic anodes may also be designed such that the galvanic anodes deliver current to a much smaller area of steel when the powered anodes operate. Because the unpowered galvanic anodes deliver current to less steel, they effectively deliver more protection to that steel and are, in effect, also more powerful because the anode to steel area ratio is effectively changed by the action of the powered anodes.

**Claims**

1. A method of protecting steel in a reinforced concrete element, the reinforced concrete of the element containing an electrolyte, the method comprising:

   providing at least one source of direct current, 'DC', power with a positive and negative terminal, wherein the source of DC power is at least one of; an external source of DC power as part of an impressed current system, a cell with a cell anode and a cell cathode and a cell electrolyte and one or more isolating elements that substantially isolate the cell electrolyte from the electrolyte of the reinforced concrete element; providing a primary anode, wherein the primary anode is a discrete sacrificial anode and the primary anode is distinct from the source of DC power;
   providing a secondary anode, wherein the secondary anode is connected to the positive terminal of the at least one source of DC power via an electron conducting connection;
   arranging the primary anode and the secondary anode to have an ionic connection with the steel in the reinforced concrete element via the electrolyte of the reinforced concrete element;
   connecting the primary anode to the steel in the reinforced concrete element using an electron conductor; along with
   connecting the negative terminal of the source of DC power to the steel in the reinforced concrete element using an electron conductor.

2. A method as claimed in claim 1 wherein, in said arranging step, a plurality of the primary anodes are provided and a single secondary anode is provided within a region of said reinforced concrete element.

3. A method as claimed in claim 2 wherein, a plurality of secondary anodes are provided and the number of primary anodes provided exceeds the number of secondary anodes provided.

4. A method as claimed in any preceding claim wherein, in said arranging step, said at least one primary anode is spaced from said at least one secondary anode at a distance of no more than substantially 2 meters within a 10% tolerance (preferably no more than substantially 1 meter or no more than substantially 600mm).

5. A method as claimed in any preceding claim wherein, in said arranging step, said at least one primary anode and said at least one secondary anode are provided at a density of at least two primary anodes and said at least one secondary anode per square meter of a surface of said reinforced concrete.

6. A method as claimed in any preceding claim further comprising connecting each primary anode to the negative terminal of the source of DC power using at least one electron conductor selected from an electric cable or a metal wire.

7. A method as claimed in any preceding claim wherein the reinforced concrete element comprises a section of a concrete structure.

8. A method as claimed in any preceding claim wherein each said secondary anode is a sacrificial anode.

9. A method as claimed in any preceding claim wherein each said secondary anode and respective source of DC power are parts of an integrated anode assembly in which said secondary anode and said source of DC power are integrated to form a single unit.

10. A method as claimed in claim 9 wherein the source of DC power is a cell and the secondary anode is a sacrificial anode and the charge capacity of the secondary anode is substantially no less than 1.25 times the charge capacity of the cell within a 10% tolerance.

11. A method as claimed in claim 10 wherein the charge capacity of the secondary anode is substantially at least 100 kilo-Coulombs within a 10% tolerance (preferably at least 150 kilo-Coulombs).

12. A method as claimed in any of claims 1 to 8 wherein a plurality of secondary anodes are connected to a positive terminal of a single external source of DC power via an electron conducting connection as part of an impressed current system.

13. A sacrificial anode reinforced concrete protection assembly for use in the method of any of claims 9 to 11, the assembly comprising:

    a primary anode being a sacrificial anode; and
    a secondary anode being a sacrificial anode, the secondary anode having a first charge capacity; and
    a cell for use as the source of DC power of said method with a cell anode and a cell cathode in contact with a cell electrolyte, the cell having a second charge capacity;
    wherein the cell includes one or more isolating elements to substantially isolate the cell electrolyte from the electrolyte in the environment; and
    wherein the secondary anode is connected to a positive terminal of the cell; and
    wherein the primary anode is connected to the negative terminal of the cell; and
    wherein the primary anode and secondary anode are integrated with the cell as a single unit.

14. An assembly as claimed in claim 13 wherein the charge capacity of the secondary anode is substantially no less than 1.25 times the charge capacity of the cell within in a 10% tolerance.

15. An assembly as claimed in at least one of claims 13 and 14 wherein the charge capacity of the secondary anode is substantially at least 100 kilo-Coulombs within a 10% tolerance (preferably at least 150 kilo-Coulombs).

**Patentansprüche**

1. Verfahren zum Schutz von Stahl in einem bewehrten Betonelement, wobei der bewehrte Beton des Elements einen Elektrolyten enthält, wobei das Verfahren Folgendes umfasst:

Bereitstellen mindestens einer Quelle von Gleichstromleistung, 'DC'-Leistung, mit einem positiven und negativen Anschluss, wobei die Quelle von DC-Leistung wenigstens eins ist ausgewählt aus; einer externen Quelle von DC-Leistung, die Bestandteil eines Fremdstromsystems ist, einer Zelle mit einer Zellanode und einer Zellkathode und einem Zellelektrolyten und einem oder mehreren isolierenden Elementen, die im Wesentlichen den Zellelektrolyten vom Elektrolyten des bewehrten Betonelements isolieren;
Bereitstellen einer Primäranode, wobei es sich bei der Primäranode um eine separate Opferanode handelt und die Primäranode von der Quelle von DC-Leistung verschieden ist;
Bereitstellen einer Sekundäranode, wobei die Sekundäranode über eine elektronenleitende Verbindung mit dem positiven Anschluss der mindestens einen Quelle von DC-Leistung verbunden ist;
Anordnen der Primäranode und der Sekundäranode, sodass diese über den Elektrolyten des bewehrten Betonelements mit einem Stahl im bewehrten Betonelement in Ionenverbindung stehen;
Verbinden der Primäranode mit dem Stahl im bewehrten Betonelement unter Verwendung eines Elektronenleiters; wobei ebenso der negative Anschluss der Quelle von DC-Leistung unter Verwendung eines Elektronenleiters an den Stahl im bewehrten Betonelement angeschlossen wird.

2. Verfahren nach Anspruch 1, wobei im Anordnungsschritt eine Vielzahl der Primäranoden bereitgestellt werden und eine einzige Sekundäranode innerhalb einer Region des bewehrten Betonelements bereitgestellt wird.

3. Verfahren nach Anspruch 2, wobei eine Vielzahl von Sekundäranoden bereitgestellt werden und die Anzahl an bereitgestellten Primäranoden die Anzahl an bereitgestellten Sekundäranoden übertrifft.

4. Verfahren nach einem beliebigen vorhergehenden Anspruch, wobei im Anordnungsschritt die mindestens eine Primäranode in einem Abstand zu der mindestens einen Sekundäranode angeordnet wird, der mit einer Toleranz von 10 % im Wesentlichen nicht mehr als 2 Meter beträgt (wobei er vorzugsweise im Wesentlichen nicht mehr als 1 Meter beträgt oder im Wesentlichen nicht mehr als 600 Millimeter beträgt).

5. Verfahren nach einem beliebigen vorhergehenden Anspruch, wobei im Anordnungsschritt die mindestens eine Primäranode und die mindestens eine Sekundäranode in einer Dichte von mindestens zwei Primäranoden und der mindestens einen Sekundäranode pro Quadratmeter einer Fläche des bewehrten Betons bereitgestellt werden.

6. Verfahren nach einem beliebigen vorhergehenden Anspruch, wobei es des Weiteren das Verbinden jeder der Primäranoden mit dem negativen Anschluss der Quelle von DC-Leistung umfasst, unter Verwendung mindestens eines Elektronenleiters, der aus einem elektrischen Kabel oder einem Metalldraht ausgewählt ist.

7. Verfahren nach einem beliebigen vorhergehenden Anspruch, wobei das bewehrte Betonelement einen Abschnitt eines Betonbauwerks umfasst.

8. Verfahren nach einem beliebigen vorhergehenden Anspruch, wobei es sich bei jeder der Sekundäranoden um eine Opferanode handelt.

9. Verfahren nach einem beliebigen vorhergehenden Anspruch, wobei jede der Sekundäranoden und die jeweilige Quelle von DC-Leistung Bestandteil einer integrierten Anodenanordnung sind, in der die Sekundäranode und die Quelle von DC-Leistung integriert sind, um eine Einzeleinheit zu bilden.

10. Verfahren nach Anspruch 9, wobei es sich bei der Quelle von DC-Leistung um eine Zelle handelt und es sich bei der Sekundäranode um eine Opferanode handelt und die Ladekapazität der Sekundäranode, mit einer Toleranz von 10 %, im Wesentlichen nicht weniger als das 1,25-Fache der Ladekapazität der Zelle beträgt.

11. Verfahren nach Anspruch 10, wobei die Ladekapazität der Sekundäranode, mit einer Toleranz von 10 %, im Wesentlichen mindestens 100 Kilocoulomb beträgt (wobei sie vorzugsweise mindestens 150 Kilocoulomb beträgt).

12. Verfahren nach einem beliebigen der Ansprüche 1 bis 8, wobei eine Vielzahl von Sekundäranoden über eine elektronenleitende Verbindung, die Bestandteil eines Fremdstromsystems ist, mit einem positiven Anschluss einer einzigen externen Quelle von DC-Leistung verbunden sind.

13. Opferanoden-Bewehrtbeton-Schutzanordnung, zur Verwendung in dem Verfahren nach beliebigen der Ansprüche 9 bis 11, wobei die Anordnung Folgendes umfasst:

eine Primäranode, bei der es sich um eine Opferanode handelt; und
eine Sekundäranode, bei der es sich um eine Opferanode handelt, wobei die Sekundäranode eine erste Ladekapazität hat; und
eine Zelle zur Verwendung als Quelle von DC-Leistung des Verfahrens, mit einer Zellanode und einer Zellkathode, die mit einem Zellelektrolyten an Kontakt sind, wobei die Zelle eine zweite Ladekapazität hat;
wobei die Zelle ein oder mehrere isolierende Elemente beinhaltet, um den Zellelektrolyten von dem Elektrolyten in der Umgebung im Wesentlichen zu isolieren; und
wobei die Sekundäranode mit dem positiven Anschluss der Zelle verbunden ist; und
wobei die Primäranode mit dem negativen Anschluss der Zelle verbunden ist; und
wobei die Primäranode und die Sekundäranode mit der Zelle als eine Einzeleinheit integriert sind.

14. Anordnung nach Anspruch 13, wobei die Ladekapazität der Sekundärelektrode, mit einer Toleranz von 10 %, im Wesentlichen nicht weniger als das 1,25-Fache der Ladekapazität der Zelle beträgt.

15. Anordnung, nach einem der Ansprüche 13 und 14, wobei die Ladekapazität der Sekundäranode, mit einer Toleranz von 10 %, im Wesentlichen mindestens 100 Kilocoulomb beträgt (wobei sie vorzugsweise mindestens 150 Kilocoulomb beträgt).

**Revendications**

1. Procédé de protection de l'acier dans un élément en béton armé, le béton armé de l'élément contenant un électrolyte, le procédé comprenant :

prévoir au moins une source d'énergie en courant continu "DC", ayant une borne positive et une borne négative, la source d'énergie DC étant au moins l'une de : une source extérieure d'énergie DC, comme partie d'un système de courant appliqué, une pile ayant une anode de pile et une cathode de pile et un électrolyte de pile et un ou plusieurs éléments isolants, qui isolent sensiblement l'électrolyte de la pile de l'électrolyte de l'élément en béton armé;
prévoir une anode primaire, l'anode primaire étant une anode sacrificielle discrète et l'anode primaire étant distincte de la source d'énergie DC;
prévoir une anode secondaire, l'anode secondaire étant connectée à la borne positive de la au moins une source d'énergie DC par l'intermédiaire d'une connexion de conduction d'électrons;
agencer l'anode primaire et l'anode secondaire pour avoir une connexion ionique avec l'acier dans l'élément en béton armé par l'intermédiaire de l'électrolyte de l'élément en béton armé;
connecter l'anode primaire à l'acier de l'élément en béton armé, en utilisant un conducteur d'électrons, en même temps que connecter la borne négative de la source d'énergie DC à l'acier de l'élément en béton armé, en utilisant un conducteur d'électrons.

2. Procédé tel que revendiqué à la revendication 1, dans lequel, dans le stade d'agencement, il est prévu une pluralité d'anodes primaires et il est prévu une anode secondaire unique au sein d'une région de l'élément en béton armé.

3. Procédé tel que revendiqué à la revendication 2, dans lequel il est prévu une pluralité d'anodes secondaires et le nombre d'anodes primaires prévues dépasse le nombre d'anodes secondaires prévues.

4. Procédé tel que revendiqué à l'une quelconque des revendications précédentes, dans lequel, dans le stade d'agencement, la au moins une anode primaire est à distance de la au moins une anode secondaire d'une distance de sensiblement pas plus de 2 mètres dans une tolérance de 10% (de préférence de sensiblement pas plus de 1 mètre ou pas plus de sensiblement 600 mm).

5. Procédé tel que revendiqué à l'une quelconque des revendications précédentes, dans lequel, dans le stade d'agencement, la au moins une anode primaire et la au moins une anode secondaire sont prévues en une densité d'au moins deux anodes primaires et la au moins une anode secondaire par mètre carré de surface du béton armé.

6. Procédé tel que revendiqué à l'une quelconque des revendications précédentes, comprenant, en outre, connecter chaque anode primaire à la borne négative de la source d'énergie DC, en utilisant un conducteur d'électrons choisi parmi un câble électrique et un fil métallique.

7. Procédé tel que revendiqué à l'une quelconque des revendications précédentes, dans lequel l'élément en béton armé comprend une partie d'une structure en béton.

8. Procédé tel que revendiqué à l'une quelconque des revendications précédentes, dans lequel l'anode secondaire est une anode sacrificielle.

9. Procédé tel que revendiqué à l'une quelconque des revendications précédentes, dans lequel chaque anode secondaire et source d'énergie DC respective font partie d'un ensemble d'anode intégré, dans lequel l'anode secondaire et la source d'énergie DC sont intégrées pour former une unité unique.

10. Procédé tel que revendiqué à la revendication 9, dans lequel la source d'énergie DC est une pile et l'anode secondaire est une anode sacrificielle et la capacité de charge de l'anode secondaire n'est sensiblement pas inférieure à 1,25 fois la capacité de charge de la pile dans une tolérance de 10%.

11. Procédé tel que revendiqué à la revendication 10, dans lequel la capacité de charge de l'anode secondaire est sensiblement d'au moins 100 kilos-Coulombs dans une tolérance de 10% (de préférence d'au moins 150 kilos-Coulombs).

12. Procédé tel que revendiqué à l'une quelconque des revendications 1 à 8, dans lequel une pluralité d'anodes secondaires sont connectées à une borne positive d'une source extérieure unique d'énergie DC par l'intermédiaire d'une connexion conductrice d'électrons, comme partie d'un système de courant appliqué.

13. Ensemble de protection du béton armé à anode sacrificielle, à utiliser dans le procédé suivant l'une quelconque des revendications 9 à 11, l'ensemble comprenant :

    une anode primaire étant une anode sacrificielle et
    une anode secondaire étant une anode sacrificielle, l'anode secondaire ayant une première capacité de charge et
    une pile à utiliser comme source d'énergie DC du procédé, ayant une anode de pile et une cathode de pile en contact avec un électrolyte de pile, la pile ayant une deuxième capacité de charge;
    dans lequel la pile comprend un ou plusieurs éléments isolant pour isoler sensiblement l'électrolyte de pile de l'électrolyte aux alentours et
dans lequel l'anode secondaire est connecté à une borne positive de la pile et
dans lequel l'anode primaire est connectée à la borne négative de la pile et
dans lequel l'anode primaire et l'anode secondaire sont intégrées à la pile en tant qu'une unité unique.

14. Ensemble tel que revendiqué à la revendication 13, dans lequel la capacité de charge de l'anode secondaire n'est sensiblement pas plus petite que 1,25 fois la capacité de charge de la pile dans une tolérance de 10%.

15. Ensemble tel que revendication dans au moins l'une des revendications 13 et 14, dans lequel la capacité de charge de l'anode secondaire est sensiblement d'au moins 100 kilos-Coulombs dans une tolérance de 10% (de préférence d'au moins 150 kilos-Coulombs).

Figure 1

Figure 2

Figure 3

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

Figure 19

EP 2 909 361 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2426008 A
- US 7909982 B
- US 8273239 B
- US 8211289 B
- US 7704372 B